# FASCICULE DE BREVET EUROPEEN

(11) **EP 3 847 004 B1**
(45) Date de publication et mention de la délivrance du brevet: **12.06.2024**
(21) Numéro de dépôt: 19786391.3
(22) Date de dépôt: 06.09.2019
(51) Int. Cl.: B29C 65/02, B65B 51/26, B65B 57/02, G01B 7/06, B29C 65/10, B29C 65/14, B29C 65/20, B29C 65/36, B29C 65/50, B29C 65/48, B29C 65/78

(54) **PROCÉDÉ ET DISPOSITIF DE FABRICATION D'UNE SOUDURE D'EMBALLAGE**
VERFAHREN UND VORRICHTUNG ZUR HERSTELLUNG EINER VERPACKUNGSSCHWEISSNAHT
METHOD AND DEVICE FOR PRODUCING A PACKING WELD

(30) Priorité: 07.09.2018 EP 18193142
(43) Date de publication de la demande: 14.07.2021
(73) Titulaire: Aisapack Holding SA, 1896 Vouvry (CH)
(72) Inventeur: THOMASSET, Jacques, 74500 Neuvecelle (FR); GEX-COLLET, Yan, 1871 Choëx (CH); BUSSIEN, Gaël, 1897 Le Bouveret (CH); FLEURET, François, 1400 Yverdon-les-Bains (CH); LEPOITTEVIN, Yann, 1005 Lausanne (CH); MONAY, Florent, 1870 Monthey (CH)
(74) Mandataire: Grosfillier, Philippe
(86) Numéro de dépôt international: PCT/IB2019/057551
(87) Numéro de publication internationale: WO 2020/049531

(56) Documents cités:
- EP-A1- 3 292 942
- WO-A1-2011/012930

## Description

### Domaine de l'invention

L'invention se situe dans le domaine des emballages, et plus particulièrement des emballages flexibles fabriqués par soudage d'une feuille plastique. L'invention peut être utilisée par exemple pour la fabrication de tubes d'emballage destinés au conditionnement de produits liquides ou visqueux. Bien entendu, la présente invention n'est pas limitée à cette application unique de fabrication de tubes d'emballage mais peut s'appliquer à d'autres domaines dans lesquels la fabrication d'un objet découle du soudage de feuilles, par exemple en plastique.

### Etat de la technique

La publication WO2011/012930 décrit un procédé de soudage d'un emballage en matière plastique de forme tubulaire. Le procédé comprend les opérations suivantes :
- ) une opération d'enroulement lors de laquelle on enroule un laminé,
- ) une opération de mise en disposition lors de laquelle on dispose les extrémités du laminé à proximité l'une de l'autre,
- ) une opération d'extrusion lors de laquelle on extrade et dépose sur lesdites extrémités un cordon de résine à l'état fondu,
- ) une opération de fusion lors de laquelle on fait fondre lesdites extrémités par l'intermédiaire dudit cordon,
- ) une opération de compression lors de laquelle on met en pression la zone de soudure, et
- ) une opération de refroidissement lors de laquelle on refroidit la soudure.

A titre d'exemple, la demande de brevet EP3292942 décrit un procédé et un dispositif pour le contrôle en continu de l'étanchéité d'une soudure à l'extrémité d'un tube contenant un produit. L'invention de EP3292942 est plus particulièrement, mais non exclusivement destinée au domaine du conditionnement de produits cosmétiques stériles, liquides ou pâteux dans un emballage tubulaire souple, dont une extrémité est aplatie et soudée pour assurer son étanchéité. Un tel emballage permet de dispenser, par une ouverture généralement refermable à l'une de ses extrémités, une quantité précise du produit contenu, fonction de la pression exercée sur le tube.

L'invention de EP3292942 est destinée à une ligne de conditionnement automatique d'un tel produit dans un tel emballage, avec des cadences de production de l'ordre de 200 tubes remplis par minute.

Selon un exemple de mise en œuvre du procédé connu de EP3292942, une telle ligne de conditionnement en emballage tubulaire comprend un poste de remplissage où le produit est déversé dans l'extrémité ouverte du tube, positionné sous une trémie, par un dispositif de dosage et de remplissage. Selon un exemple de mise en oeuvre, le tube se trouve en position verticale sous la trémie, l'extrémité ouverte étant en haut. La ligne de conditionnement comprend un poste de fermeture dans lequel l'extrémité ouverte du tube est refermée par soudure. Selon un exemple de réalisation, la fermeture de cette extrémité ouverte comprend un pincement de l'extrémité du tube, les lèvres ainsi pincées étant alors soudées entre elles par des moyens appropriés. Le tube est ensuite évacué de la zone de conditionnement.

La figure 1 de EP3292942 relative à l'art antérieur représente l'extrémité soudée (110) d'un tube (100) après une telle opération. Cette extrémité soudée (110) est une zone striée (112) correspondant à la soudure des lèvres de l'extrémité du tube (100). Ladite zone striée (112) s'étend sur toute la largeur du tube sur une hauteur généralement comprise entre 5 mm et 7 mm. Selon un exemple de mise en oeuvre, un surplus de matière à l'extrémité supérieure de la zone striée est coupé, après l'opération de soudure, afin de réduire la hauteur de ladite zone striée et d'améliorer l'esthétique du tube. Selon un exemple de réalisation courant, la soudure de la zone striée est réalisée par des mors striés, de sorte que cette zone est gaufrée sur une bonne part de sa surface, mais comprend fréquemment une zone plane (113) sur laquelle est gravé un code d'identification, ou des mentions légales. Selon d'autres modes de réalisation, des mors non striés sont utilisés et la zone dite striée est lisse.

Afin de réduire les risques de soudure défectueuse, le pincement et la soudure sont réalisés entre 0,5 mm et quelques millimètres au-dessus du niveau (111) de remplissage du tube, évitant ainsi la pollution des faces soudées par le produit conditionné.

Dans le cas où le produit contenu dans le tube est un produit cosmétique stérile, le remplissage est réalisé dans un environnement stérile. Mais même dans ces conditions de remplissage, il est souhaitable que l'extrémité inférieure de la soudure, côté produit, soit la plus proche possible du niveau de produit dans le tube, de sorte que le moins d'air possible soit emprisonné dans le tube, afin d'assurer une bonne conservation du produit. La soudure est ainsi réalisée au ras du niveau de produit contenu, augmentant ainsi les risques de pollution des interfaces soudées par du produit et de soudure défectueuse.

Dans ces circonstances, si la hauteur du pincement est mal positionnée par rapport au niveau de remplissage du tube, la zone de soudure est susceptible d'être polluée par du produit et le tube est susceptible présenter un défaut d'étanchéité. Ce défaut d'étanchéité n'est pas toujours visible sur le produit fini et dans certains cas ne se révèle que lors des premiers pressages sur le tube par l'utilisateur final. De plus, compte tenu des cadences élevées de production, un tel défaut est susceptible de se reproduire sur un grand nombre de tubes. Les causes de défaut d'étanchéité sont multiples et résultent, par exemple, d'un mauvais réglage, d'une usure des mors de soudure, d'une erreur ou d'une dérive des paramètres de soudage ou de pincement, ou même des paramètres de remplissage, sans que cette liste ne soit ni exhaustive ni limitative. Même si un défaut d'étanchéité n'engendre pas de fuites, celui-ci peut conduire à la contamination du produit par des micro-organismes et compromettre sa conservation. L'invention de EP3292942 vise à résoudre les inconvénients de l'art antérieur en détectant, de manière non destructive, tout défaut d'étanchéité de la fermeture d'extrémité d'un tube de conditionnement juste après la réalisation de la soudure, sans ralentir la cadence de production. Le procédé et le dispositif objet de l'invention de EP3292942 permettent ainsi de mettre au rebut tout tube présentant un tel défaut et de prévenir l'opérateur de la ligne de conditionnement de l'apparition d'un tel défaut, de sorte qu'il prenne les mesures appropriées pour y remédier.

Le document JP S63 253205 décrit un procédé de contrôle de l'extrémité soudée d'un tube. Compte tenu de la forme gaufrée de l'extrémité soudée, de la forme des défauts constatés, telle qu'une inclusion de produit dans la soudure, ce procédé de l'art antérieur ne permet pas de détecter de manière fiable les défauts visés par l'invention sur une ligne de conditionnement à haute cadence, et conduit, selon la sensibilité du réglage, soit à laisser passer des tubes comprenant des défauts, soit à des arrêts intempestifs de la ligne de conditionnement. Or l'intervention sur une ligne de conditionnement stérile est problématique et son redémarrage après intervention implique de rétablir la stérilité. À cette fin, l'invention de EP3292942 concerne un procédé pour le contrôle de l'étanchéité de l'extrémité soudée d'un emballage tubulaire après son remplissage, notamment par un produit stérile comprenant les étapes consistant à
- ) réaliser une première soudure de l'extrémité du tube après pincement des lèvres de sorte à créer un talon lisse ;
- ) mesurer l'épaisseur dudit talon.

Ainsi dans EP3292942, une première soudure est réalisée au plus près du contenu du tube au moment de son pincement avant que la partie supérieure, au-dessus du talon, ne soit elle-même soudée en rapprochant les lèvres du tube selon un motif gaufré. Le talon est lisse, et d'une épaisseur prévisible, sensiblement égale au double de l'épaisseur des parois du tube. Ainsi il est facile de contrôler de manière fiable tout défaut de soudure, que celui-ci soit localisé, par la présence de produit dans le talon, ou étendu.

L'invention de EP3292942 est avantageusement mise en œuvre selon les modes de réalisation et les variantes exposés dans EP3292942

Par exemple, selon un mode de réalisation de EP3292942, le procédé objet de l'invention comprend notamment une étape consistant à détecter une variation d'épaisseur du talon selon une direction parallèle à longueur de la soudure.

La détection d'une variation d'épaisseur est plus simple et plus fiable de mise en œuvre qu'une mesure exacte de l'épaisseur, laquelle est susceptible de varier également selon les lots d'emballages tubulaires.

Ainsi, le procédé objet de l'invention de EP3292942 comprend avantageusement les étapes consistant notamment à :
- obtenir une limite de variation acceptable de l'épaisseur de la partie mesurée ;
- si la variation d'épaisseur détectée lors de l'étape (iii) est supérieure à la limite de variation acceptable, rebuter l'emballage tubulaire.

Comme résultat du procédé et dispositif de de EP3292942, les emballages tubulaires défectueux sont systématiquement écartés.

En résumé : EP3292942 décrit un procédé de contrôle en ligne de l'étanchéité de l'extrémité soudée d'un emballage après son remplissage et l'invention de cette antériorité consiste à mesurer l'épaisseur du talon du tube pour garantir l'étanchéité et EP3292942 permet de rejeter les emballages dont l'épaisseur de soudure est en dehors des variations acceptables.

Toutefois, dans EP3292942 le contrôle de l'épaisseur est fait sur une ligne de conditionnement qui avance de façon intermittente. La mesure de l'épaisseur est effectuée pendant la phase d'arrêt et non pas pendant la phase d'indexage. La mesure peut donc être faite "en statique" dans des conditions similaires aux mesures faites en laboratoire. Cette publication n'apporte donc aucune amélioration de ce point de vue.

En conséquence, EP3292942 ne permet pas de mesurer l'épaisseur de la soudure au cours du procédé de fabrication de la soudure dans une machine en fonctionnement qui génère des bruits parasites liés audit fonctionnement.

EP3292942 ne permet pas de mesurer l'épaisseur de la soudure en cours de procédé de fabrication dans le cas où la soudure est en mouvement continu par rapport à l'outil de soudage et de mesure.

Dans le procédé proposé dans EP3292942, les vibrations ne sont pas problématiques car elles sont annulées par le fait que l'on mesure en même temps par les deux côtés. Le problème des vibrations ou du bruit n'est pas exposé dans EP3292942 car ce n'est pas un problème.

Dans la présente demande et comme décrit plus en détail ci-dessous, un des problèmes principaux est celui de l'amplitude du bruit parasite (vibrations) par rapport à l'amplitude des variations mesurées. Comme, dans les configurations et modes d'exécution selon l'invention, il n'est pas possible de mesurer conjointement par les deux côtés, le procédé proposé dans EP3292942 ne peut être appliqué.

Outre les défauts relevés ci-dessus de l'état de la technique, les problèmes à résoudre auxquels l'on est confronté dans un environnement de production industriel sont notamment les suivants, dans le contexte de la présente invention de production d'emballages en continu :
- Effectuer des mesures précises sur une machine de soudage dans un environnement industriel sachant que
   o Le signal à mesurer est noyé dans un bruit parasite lié aux vibrations de la machine et généré par son fonctionnement.
   o La précision souhaitée de la mesure est environ 10 fois plus faible que l'amplitude du bruit parasite lié à l'environnement industriel.

La méthode proposée dans l'invention décrite ci-dessous permet de palier les inconvénients précités et d'effectuer les mesures désirées avec la précision souhaitée, dans un environnement de production en continu.

### Définitions et références numériques

1 soudure
2 extrémités de la feuille
3 couche supérieure
4 couche inférieure
5 couche fonctionnelle
6 épaisseur de la soudure
7 matière coulée
8 interface soudée
9 recouvrement
10 palpeur principal
11 capteur principal
12 bâti de la machine
13 vérin
14 contrepièce
15 dispositif de mesure
16 signal du capteur principal
17 palpeur secondaire
18 ressort
19 capteur secondaire
20 signal du capteur secondaire
21 bande de renfort
22 cordon de soudure
23 couche extrudée

### Exposé général de l'invention

Un but de l'invention est d'améliorer les procédés et dispositifs de fabrication d'emballages soudés, en particulier de tubes d'emballage destinés au conditionnement de produits liquides ou visqueux.

Un autre but est de proposer des procédés et dispositifs pouvant être utilisés de manière fiable dans un environnement industriel en production, malgré les vibrations et le bruit engendrés dans ce cadre.

Un autre but est de proposer des procédés et dispositifs pouvant être mis en œuvre de façon simple et efficace.

Un autre but est de proposer des procédés et des systèmes modulaires qui peuvent se mettre en œuvre sur des machines existantes.

D'autre buts et solutions découlant de la présente invention seront décrit dans le texte ci-dessous et dans les modes d'exécution de la présente invention.

L'invention porte notamment sur un procédé de soudage d'une feuille en continu, à grande cadence de production et comportant une étape de mesure de l'épaisseur de la soudure pendant la production et sans arrêt de la machine. Une analyse dε.ε signal obtenu lors de cette mesure permet ensuite de déterminer la qualité de la soudure et de décider si le tube remplit les conditions souhaitées de qualité.

Le procédé selon l'invention est particulièrement destiné, mais pas exclusivement au domaine des tubes d'emballage flexible. Le segment de marché concerné est le suivant comme exemple non-limitatif : produits liquides et visqueux pour le marché de l'"oral care", de la cosmétique, le domaine pharmaceutique, et le domaine alimentaire.

Le procédé de soudage comprend notamment les étapes suivantes :
- Déroulement d'une feuille imprimée, par exemple à partir d'une bobine
- Découpe à la largeur requise
- Conformation de la feuille découpée en forme tubulaire
- Positionnement des extrémités à souder
- Chauffage des extrémités positionnées
- Compression des extrémités positionnées
- Refroidissement
- Eventuellement reformage
- Mesure de l'épaisseur
- Découpe à une longueur prédéterminée pour l'obtention de segments tubulaires imprimés

Dans des étapes ultérieures, pour la fabrication de l'emballage (par exemple un tube):
- Les segments tubulaires sont soudés à une épaule de tube (par soudage, ou par surmoulage par compression ou injection)
- Operculage
- Bouchonnage

Le remplissage de l'emballage s'effectue de la façon suivante, également dans des étapes ultérieures :
- Remplissage par l'extrémité restée ouverte
- Soudage du talon pour former l'emballage final avec son produit.

Selon l'un des principes de l'invention, la contrôle de certaines des propriétés de la soudure permet d'assurer la qualité de ladite soudure. Le contrôle étant fait en continu lors de la production, il est possible grâce à l'invention de réagir rapidement dans le processus de fabrication lorsque la soudure ne remplit pas les conditions souhaitées, ou lorsqu'une dérive de certains paramètres est constatée. Il n'est donc pas nécessaire d'attendre la fin d'une production complète et la mesure en laboratoire d'échantillons de tubes produits, comme décrit ci-dessous, le principe de l'invention étant bien plus intéressant économiquement en cas de défaut puisqu'il évite la mise au rebut de l'ensemble de la production en permettant une réaction immédiate dès la détection d'une dérive et/ou d'un défaut.

Actuellement, le contrôle se fait par pointage sur des tubes produits et découpés. Concrètement, des tels tubes sont prélevés dans une production (par exemple dans des lots) et ces tubes sont découpés et/ou mesurés individuellement pour déterminer s'ils remplissent les conditions de qualité requise. Toutefois, ces tests et mesures ne permettent pas un retour et une réaction rapide au niveau de la production de sorte que de nombreux tubes défectueux peuvent être fabriqués avant une réaction sur les machines de production ce qui donne lieu à un nombre importants de déchets et rebuts. L'arrêt de la production d'une machine est également très coûteux et doit être évité dans la mesure du possible.

En conséquence, selon le principe de l'invention, on cherche à effectuer un contrôle de qualité pertinent pendant la production, en continu, qui permette une réaction immédiate en cas de défaut constaté ou de dérive du processus de fabrication au cours du temps. De plus, une mesure permanente en cours de production permet également de détecter des problèmes de machine comme on le comprendra de la description qui suit.

Selon la présente invention, il a été démontré que la stabilité de l'épaisseur de la soudure permet de conclure sur la stabilité et la qualité de la soudure et par conséquent de garantir les propriétés de la soudure.

En conséquence du principe énoncé ci-dessus, il découle qu'une mesure de l'épaisseur de la soudure permet de mesurer la stabilité de la soudure. Ainsi, une épaisseur de soudure constante conduit à un taux de compression de la soudure constant si l'épaisseur de la feuille est constante. La compression de la soudure ayant une influence sur les écoulements de matière fondue, une compression de la soudure constante induit des écoulements de matière identiques et par conséquent une configuration et des propriétés de la soudure inchangées.

Dans un mode d'exécution, on peut accepter de faibles variations d'épaisseur, par exemple entre des valeurs limites acceptables. Ces valeurs limites peuvent être définies au préalable et/ou par l'expérience et/ou par apprentissage et basées, par exemple sur les matières utilisées ou le produit à former.

Dans le cas où une dérive lente de l'épaisseur mesurée de la soudure est observée, cela indique que soit cette dérive est liée à une dérive du procédé (par exemple une montée en température de certains éléments constitutifs du procédé), soit que cette dérive est liée à une variation lente de l'épaisseur moyenne de la feuille soudée. Afin de conserver des propriétés de soudure inchangées, des seuils peuvent être fixés au-delà desquels des interventions sont nécessaires. Ces interventions peuvent consister par exemple à ajuster les réglages de la machine.

La présente invention apporte les avantages suivants :
- une diminution des rebuts puisque la mesure s'effectue en continu lors de la production ;
- une production à grande cadence puisque la mesure et l'analyse se font lors de la production en continu, directement sur l'objet produit (soit la mesure de l'épaisseur), sans nécessité de ralentir la cadence de production ;
- une détection des défauts en temps réel en cours de production ;
- l'emballage défectueux est identifié avant même sa découpe finale et peut être retiré de la production par une processus de tri avant les étapes ultérieures de fabrication et de remplissage. Le coût des rebuts est ainsi diminué ;
- une détection des dérives du procédé et une correction immédiate. La quantité de rebuts est ainsi diminuée :
- la possibilité de détecter un dysfonctionnement au niveau de la machine lors de l'analyse du signal mesuré, ce qui permet aussi d'intervenir rapidement sur l'outil de production.

La présente invention permet une amélioration de la qualité produite entres autres pour les raisons suivantes :
- L'invention permet un contrôle de 100% des emballages produits avec quantification de la qualité des emballages fabriqués (par exemple en définissant une norme découlant des tolérances et de l'écart des valeurs mesurées) par rapport aux exigences du client final pour les produits fabriqués.
- Les propriétés de la soudure sont garanties grâce à une carte de contrôle de l'épaisseur de la soudure mesurée en continu.
- La mesure conjointe de la rugosité de la soudure permet de détecter des défauts ponctuels (poussières, boulettes de matières plastique, etc...)
- le suivi et traçage des lots de production et des produits.

Comme indiqué ci-dessus, les difficultés à surmonter sont notamment les suivantes :
- La précision nécessaire pour assurer la constance des propriétés de la soudure découle des très faibles variations d'épaisseur de sorte que la précision de la mesure doit être inférieure à 10 microns et de préférence à 5 microns.
- La précision de mesure souhaitée est environ 10 fois inférieure à l'amplitude du bruit parasite
- L'amplitude des variations d'épaisseur que l'on veut mesurer sont noyées dans le bruit parasite.

L'invention porte notamment sur un procédé de soudage dans lequel l'épaisseur de la soudure est mesurée de façon continue, en temps réel pendant la production avec une fréquence d'acquisition supérieure à 100Hz et de préférence supérieure à 1000Hz, d'autres valeurs étant possibles dans le cadre de l'invention. Selon l'invention, le signal primaire temporel mesuré est transformé en un signal fréquentiel. Dans ce signal fréquentiel, on recompose au moins un signal secondaire à partir des basses fréquences. De préférence, selon un mode de réalisation, on recompose trois signaux secondaires :
∘ Un signal secondaire basse fréquence à partir des basses fréquences
∘ Un signal secondaire moyenne fréquence à partir des moyennes fréquences
∘ Un signal secondaire haute fréquence à partir des hautes fréquences

Le signal secondaire basse fréquence est calculé à partir du signal primaire grâce au spectre des fréquences inférieures à f₁. Selon l'invention, la valeur de f₁ est supérieure à Cₘ/60 qui correspondrait à l'acquisition d'un point de mesure par emballage ; et de préférence supérieure à (Cₘ/60)*(Lₑ/10) qui correspondrait à un point de mesure tous les 10mm ; avec:
- f₁: fréquence en Hertz
- Cₘ : cadence de la machine en emballage par minute
- Lₑ : longueur de la soudure par emballage en mm

Le signal secondaire moyenne fréquence est calculé à partir du signal primaire grâce au spectre des fréquences supérieures à f₁ et inférieures à une fréquence f₂. Selon l'invention, la fréquence f₂ est inférieure à (Cₘ/60)*(L_{e/}0,01) qui correspondrait à l'acquisition d'un point de mesure tous les 0,01mm ; et de préférence inférieure à (Cₘ/60)*(Lₑ/0.03) qui correspondrait à un point de mesure tous les 0.03mm ; avec :
- f₂ : fréquence en Hertz
- Cₘ : cadence de la machine en emballage par minute
- Lₑ : longueur de la soudure par emballage en mm

Le signal secondaire haute fréquence est calculé à partir du signal primaire grâce au spectre des fréquences supérieures à f₂

La somme des signaux secondaires est égale au signal primaire initial.

Bien entendu, les valeurs indiquées ci-dessus le sont à titre d'exemples illustratifs et d'autres valeurs sont possibles dans le cadre de la présente invention.

Au moyen de ces signaux secondaires, on peut effectuer l'analyse et la mesure suivante:
- Le signal secondaire basse fréquence est utilisé pour mesurer l'épaisseur de la soudure car les variations d'épaisseur sont en général faibles et se produisent lentement;
- Le signal secondaire moyenne fréquence est utilisé pour mesurer la rugosité de la soudure car la rugosité génère un signal de fréquence plus élevée que les variations d'épaisseur de la soudure;
- Le signal secondaire haute fréquence est utilisé pour détecter des anomalies et/ou usures de l'équipement de soudage et du système d'acquisition du signal d'épaisseur et/ou de la machine de production car ce type d'anomalies génère des signaux de fréquence encore plus élevée.

Ces principes, avantages et modes d'exécution de la présente invention sont présentés de façon détaillée dans la description qui suit et dans les figures annexées.

### Brève description des figures

La figure 1 représente un exemple de soudure de tube par recouvrement des extrémités d'une feuille.
Les figures 2 et 3 illustrent des principes de mesure de l'épaisseur de la soudure sur une machine de production, selon un mode d'exécution de la présente invention.
Les figures 4a et 4b décrivent le procédé de soudage en continu d'une feuille comportant une mesure en ligne de l'épaisseur de la soudure. Comme décrit dans la présente demande, le procédé de soudage selon un mode d'exécution comporte notamment une phase de traitement du signal mesuré de l'épaisseur qui permet d'obtenir une précision de mesure environ 10 fois inférieure au bruit parasite lié à l'environnement industriel.
Les figures 5 à 8 représentent d'autres exemples de soudure peuvent être réalisées et mesurées selon l'invention.

### Exposé détaillé de l'invention

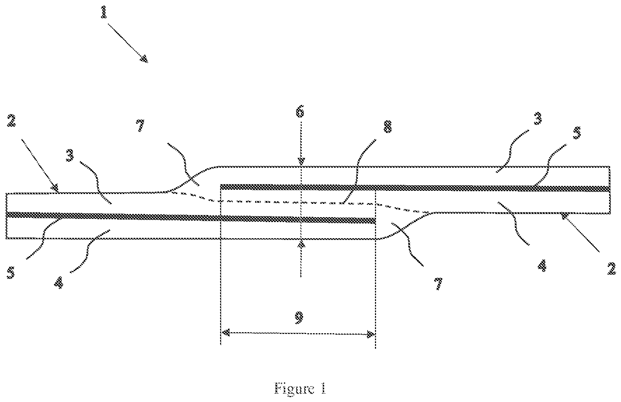

La figure 1 illustre un premier exemple de soudure 1 par recouvrement des extrémités d'une feuille (comme un laminé) pour fabriquer, un emballage par exemple un tube. Une telle configuration de soudure est typiquement un exemple de celle qui est mesurée avec un procédé selon l'invention.

Les extrémités du laminé 2 (qui en général est initialement plan) sont amenées l'une sur l'autre pour former le recouvrement 9. Le laminé est généralement formé d'au moins trois couches, dans cet exemple illustratif, d'une couche supérieure 3, une couche inférieure 4 et une couche fonctionnelle 5 (comme une couche barrière). La mesure référencée "6" définit l'épaisseur de la soudure (qui sera mesurée selon le principe de l'invention), la référence "7" illustre de la matière coulée suite à la soudure et la référence "8" indique l'interface soudée entre les extrémités.

Les propriétés des soudures des emballages ont un impact de premier ordre sur la solidité et l'étanchéité de remballage, mais également la protection et conservation des produits emballés. Pour ces raisons, une grande attention est apportée au contrôle de ces soudures dans les usines de production d'emballage. Les points de contrôle portent habituellement sur l'interface soudé 8, ainsi que sur l'encapsulation des extrémités de la couche fonctionnelle 5. Cette encapsulation permet d'éviter le contact de ladite couche 5 avec le produit emballé et permet également de limiter les risques de délamination de la feuille 2 par propagation à l'interface entre la couche 5 et la couche 4 de composants contenus dans l'emballage. Pour assurer l'encapsulation de la couche fonctionnelle 5, l'opération de soudage - consistant à chauffer, comprimer et refroidir les extrémités 2 à assembler - a pour effet de créer un écoulement de matière fondue des couches 3 et 4 du laminé lors de la compression de manière à créer une accumulation de matière coulée 7 qui vient recouvrir l'extrémité de la couche 5. L'opération de soudage étant réalisée par défilement de la feuille 2 à vitesse constante dans les éléments du procédé de soudage, et tous les paramètres étant gardés constants (chauffage, pression, refroidissement), il en résulte une soudure qui en principe varie peu. La constance des propriétés de la soudure 1 dépend entre autres de la stabilité du procédé et des propriétés du laminé.

L'invention consiste notamment à mesurer en continu un seul paramètre de la soudure (à savoir l'épaisseur 6) pour garantir l'ensemble des propriétés de la soudure. Selon cette idée, une stabilité de l'épaisseur soudée garantit la stabilité des propriétés de la soudure ; et inversement les variations des caractéristiques de la soudure ont un impact sur l'épaisseur de la soudure. Ce principe ne peut s'appliquer que si l'épaisseur de la soudure est mesurée continuellement. Si par exemple l'épaisseur de la soudure mesurée augmente, cela signifie que la soudure est moins comprimée et par conséquent, la quantité de matière coulée 7 est diminuée. Les raisons d'une augmentation de l'épaisseur de la soudure peuvent être multiples comme par exemple une augmentation du recouvrement 9, ou bien une augmentation de l'épaisseur du laminé ou encore une diminution de l'énergie apportée au laminé pour le faire fondre, ou encore une diminution de la pression de compression. Ainsi, avec la mesure d'un seul paramètre (comme l'épaisseur 6 de la soudure) c'est à la fois la constance des propriétés de la soudure qui est mesurée ainsi que la stabilité de l'ensemble du procédé de soudage. Un raisonnement similaire peut être fait pour une diminution de l'épaisseur 6 de la soudure pouvant conduire également à des propriétés de la soudure amoindries comme par exemple une quantité de matière coulée 7 trop abondante conduisant à des défauts de l'esthétique du produit final.

L'invention consiste donc notamment, mais non exclusivement, à régler initialement le procédé pour réaliser une soudure répondant à l'ensemble des critères de qualité, puis à mesurer les variations de l'épaisseur de la soudure pendant la production. L'amplitude des variations d'épaisseur 6 mesurée est utilisée pour évaluer et juger en temps réel et en continu de la qualité des soudures.

La mesure de l'épaisseur de la soudure 1 nécessite une grande précision afin d'être en mesure de contrôler indirectement en temps réel la stabilité des propriétés de ladite soudure. Les méthodes de contrôle actuelles par prélèvement statistique d'échantillons sur la ligne de production et par mesures desdits échantillons avec des appareils de laboratoire permettent d'obtenir des mesures précises et reproductibles. L'expérience montre que la stabilité des propriétés de la soudure est assurée quand le taux de compression de la soudure est compris dans un intervalle de plus ou moins 2,5%. Par exemple, pour une épaisseur de laminé de 250 microns, une variation du taux de compression de 5% correspond à une variation d'épaisseur de la soudure 6 de 25 microns. Une précision de mesure inférieure à 5 microns est nécessaire pour détecter des variations de compression de l'ordre de 1% et contrôler la compression de la soudure dans un intervalle de 5%. Grâce à l'invention, il est possible d'obtenir cette précision de mesure en ligne dans l'environnement industriel d'une machine de production produisant à grande cadence de production et générant des informations parasites nuisant à la précision de la mesure effectuée.

De façon générale et systématique dans les figures, le sens de production et de déplacement de la feuille illustrée est perpendiculaire au plan du dessin illustré.

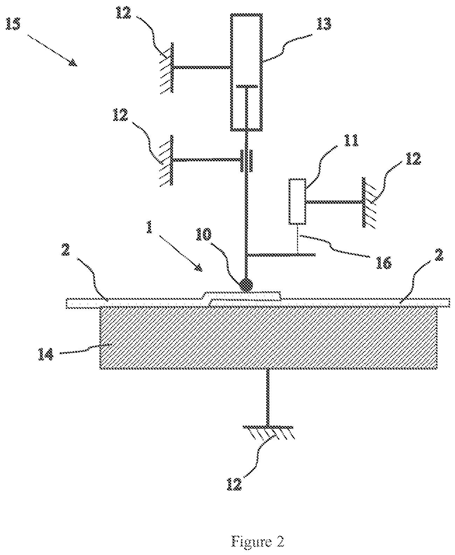

La figure 2 illustre un mode d'exécution d'un dispositif, par exemple un module, permettant la mise en œuvre du procédé selon la présente invention et la mesure de l'épaisseur de la soudure.

Le laminé est par exemple celui illustré en figure 1 et les extrémités 2 se recouvrent dans la zone de soudure 1. Le dispositif comprend un palpeur principal 10, par exemple une roulette, qui se déplace sur la soudure 1 lors du déplacement de la feuille pour mesurer l'épaisseur de ladite soudure. A cet effet, le module comprend en outre un capteur principal 11, par exemple un capteur inductif (ou autre équivalent par exemple optique), qui mesure le déplacement vertical de la roulette 10 par le signal 16. Le capteur inductif permet des mesures de grande précision, de l'ordre de 0,1 microns. Cependant comme il le sera exposé ultérieurement, le signal mesuré par le capteur 11 est noyé dans un bruit dont l'amplitude est de l'ordre de 10 microns à 20 microns, soit 100 fois la précision intrinsèque du capteur de mesure et 5 à 10 fois la précision nécessaire. D'autres types de capteurs, comme par exemple des capteurs optiques ou utilisant une autre technologie appropriée, peuvent être utilisés. La roulette 10 est montée sur un vérin 13 lui-même monté sur le bâti de la machine 12. En dessous de la feuille se trouve une contrepièce 14 qui forme une référence de base pour la mesure. Le vérin 13 permet de remonter le palpeur principal 10 lors d'un arrêt de la machine pour des changements de configuration. Une partie des bruits parasites est liée aux vibrations de la machine de production et en particulier de la contrepièce 14. Dans le cas de la confection de corps tubulaires, ladite contrepièce 14 se présente sous la forme d'une tige de soudage autour de laquelle le laminé est enroulé. Ladite tige de soudage est fixée au bâti 12 à l'une de ses extrémités et a une longueur pouvant atteindre plusieurs mètres. Cette tige de soudage repose également sur des courroies d'entrainement du laminé à l'endroit ou à proximité du dispositif de mesure 15. Tous ces éléments ont pour effet de créer des vibrations importantes de la contrepièce 14 qui génère un bruit important au niveau du capteur de mesure 15. Ces perturbations ont pour effet de générer un bruit parasite dont l'amplitude est environ 10 fois supérieure à la précision souhaitée de la mesure. L'invention permet d'utiliser l'ensemble des informations contenues dans le signal pour :
- mesurer avec précision l'épaisseur de la soudure 6,
- détecter la formations de poussières au niveau de la soudure ou des variations locales d'épaisseur,
- contrôler la qualité de la chaîne d'acquisition du capteur de mesure
- et finalement établir un diagnostic de l'usure et la qualité de certaines pièces de l'équipement.

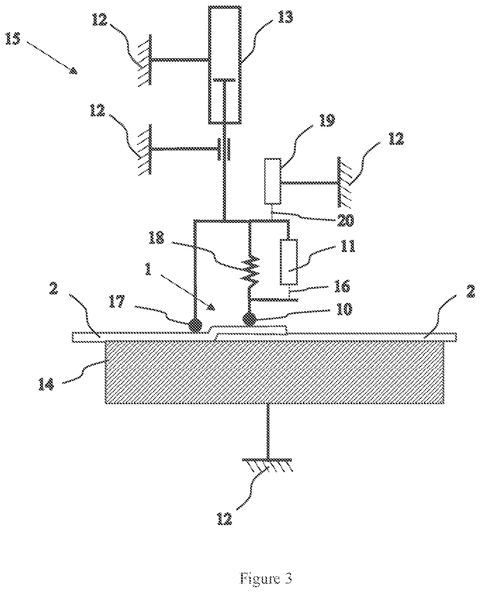

La figure 3 illustre un autre mode d'exécution d'un dispositif de mesure de l'épaisseur de la soudure 6. Dans ce mode, le système est capable de faire une mesure relative de l'épaisseur par rapport à la couche de laminé non-soudé.

A cet effet, le dispositif ou module de mesure comprend d'une part des moyens de mesure similaires à ceux de la figure 2, soit un capteur 10 (par exemple une roulette), un capteur principal 11 (par exemple optique) émettant un signal 16 et un ressort 18 maintenant le capteur 10 sur la soudure. Au lieu d'être monté sur le bâti de la machine 12, ce système de mesure est monté sur un dispositif de mesure secondaire qui comprend un palpeur secondaire 17 (comme une roulette) appliqué sur l'extrémité du laminé (par exemple sur l'extrémité 2), un capteur secondaire 19 (par exempte un capteur optique) émettant un signal de mesure secondaire 20. Le système secondaire est lié au bâti par le vérin 13 et le capteur secondaire 19 est aussi monté sur le bâti. 14 reste la contrepièce de référence. Ce dispositif de mesure comportant 2 capteurs 11 et 19, permet de mesurer l'épaisseur du laminé 2 ainsi que l'épaisseur 6 de la soudure. Ce dispositif est particulièrement intéressant lorsque l'épaisseur du laminé varie de façon importante. La mesure de l'épaisseur du laminé permet notamment de calculer le taux de compression de la soudure que l'on cherchera à garder constant même si l'épaisseur du laminé varie.

Ce mode d'exécution permet une mesure relative de l'épaisseur de la soudure par rapport au laminé non-soudé en utilisant le signal issu de chaque palpeur. Dans le cas où l'épaisseur du laminé 2 varie très faiblement et peut être considérée constante, le dispositif de mesure peut être utilisé sans le capteur 19. Ce dispositif simplifié pour la mesure de l'épaisseur de la soudure permet d'écarter de la mesure les bruits parasites liés aux vibrations de la contrepièce 14. Le dispositif simplifié ne permet pas en contrepartie d'effectuer un diagnostic sur la contrepièce 14 et les parties de l'équipement qui créent des vibrations de ladite contrepièce.

Bien entendu, les capteurs (palpeurs, capteurs optiques) décrits dans les modes d'exécution de l'invention peuvent utiliser une technologie appropriée autre que celle mentionnée pour la mesure dont ils sont chargés.

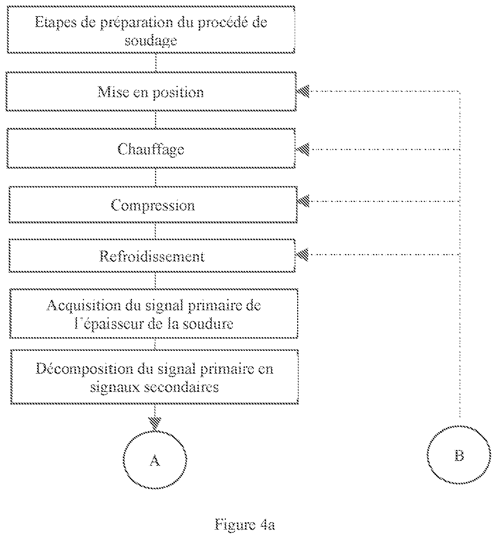

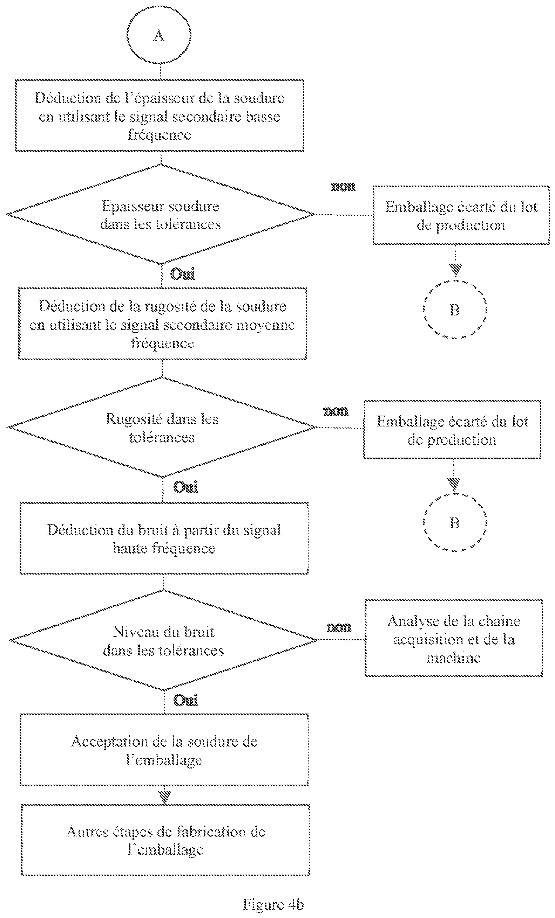

Les figures 4a et 4b illustrent sous forme de schéma-bloc un mode d'exécution du procédé selon l'invention.

Dans une première étape, on prépare le procédé de soudage. Dans l'étape de préparation, il est courant par exemple d'avoir les opérations successives suivantes (de façon non-limitative) :
- le déroulement du laminé qui est conditionné en rouleaux ;
- l'ajustement de la largeur du laminé en fonction du diamètre du tube à produire et en fonction de la largeur du recouvrement 9 :
- l'alignement du laminé avec le procédé de soudage.

D'autres opérations nécessaires pour la production du produit désiré peuvent avoir lieu dans la première étape comme par exemple des opérations d'impression, des opérations de traitement thermique ou encore des opérations de texturation.

Ensuite, on met en position le laminé pour la soudure, à savoir :
- on met en position de la feuille par rapport au dispositif de soudage ;
- on met en contact des extrémités de la feuille :
   L'opération de mise en position du laminé consiste par exemple à enrouler le laminé autour d'une tige de soudage pour former un corps cylindrique.
   On forme ensuite une zone soudée par chauffage, compression et refroidissement des extrémités du laminé ;
   Les extrémités du laminé sont ensuite chauffées, comprimées et refroidies.

L'opération de chauffage consiste notamment à faire fondre au moins l'interface à souder. Il existe de nombreuses méthodes de chauffage pouvant être utilisées comme par exemple des méthodes de chauffage utilisant les principes de conduction, de convection ou de rayonnement. De nombreuses technologies de chauffage directe ou indirecte peuvent être utilisées comme par exemple, par air chaud, par patin thermique, par induction électromagnétique, par rayonnement.

L'opération de compression de la soudure peut être réalisée conjointement ou ultérieurement à l'opération de chauffage. L'opération de compression est dans la plupart des cas nécessaire pour garantir une soudure de qualité. Une pression insuffisante peut entraîner des inclusions d'air à l'interface soudé ainsi qu'un enchevêtrement moléculaire insuffisant conduisant à la diminution de la résistance de la soudure. Comme l'illustre la figure 1, l'opération de compression de la soudure, permet également d'encapsuler les extrémités de la couche barrière du laminé.

Ensuite la soudure est refroidie. L'opération de refroidissement de la soudure vient consécutivement aux opérations de chauffage et refroidissement. Dans certains cas l'opération de refroidissement se fait également conjointement aux opérations de chauffage et de compression. Par exemple, afin de protéger la face imprimée du laminé pendant l'opération de soudage, il peut être avantageux de conserver la face imprimée du laminé en contact avec un outil froid pendant le chauffage de l'interface et la compression de la soudure.

L'opération consécutive au refroidissement et illustrée en figure 4a consiste à acquérir le signal correspondant à l'épaisseur de la soudure. Ce signal est appelé signal primaire car il est en l'état inutilisable à cause des bruits parasites dont l'amplitude est environ 10 fois plus élevée que la précision souhaitée de la mesure. Ce signal est mesuré avec un dispositif comme par exemple ceux illustrés en figure 2 ou figure 3 et décrits ci-dessus.

Périodiquement, le signal primaire est recomposé en au moins un signal secondaire. De préférence cette période correspond à une période caractéristique du procédé et du dispositif de production. Avantageusement, cette période est liée à la cadence de production de la machine et préférentiellement cette période est liée à la cadence de production des emballages. Ainsi, l'acquisition du signal est faite sans interruption grâce au dispositif de mesure décrit figure 2 ou figure 3; par contre l'analyse du signal est faite de préférence par paquets de points mesurés pendant un intervalle de temps correspondant au temps de production d'un ou plusieurs emballages. Bien entendu, d'autres façons de faire l'acquisition et l'analyse sont possibles dans le cadre de la présente invention.

Dans la suite de l'exposé, nous décrivons le processus de traitement de cet ensemble de points que nous appelons signal primaire. Avantageusement, cette opération de traitement étant réalisée à la cadence de production des emballages, cela permet d'agir pendant la production pour écarter de la production les éventuels emballages défectueux ou agir sur une dérive.

Dans un mode d'exécution, le signal primaire est au moins recomposé en un signal secondaire basse fréquence. Dans un autre mode d'exécution, le signal primaire est recomposé en deux signaux secondaires: un signal secondaire basse fréquence et un signal secondaire moyenne fréquence ou un signal secondaire haute fréquence. Dans un autre mode d'exécution, le signal primaire est recomposé en trois signaux secondaires, soit le signal secondaire basse fréquence, le signal secondaire moyenne fréquence et le signal secondaire haute fréquence.

Les méthodes de transformation et recomposition du signal temporel par analyse fréquentielle sont connues et largement utilisées dans le traitement du signal. Ces méthodes sont basées sur des outils mathématiques connus comme par exemple la transformée de Fourier, et utilisent les algorithmes qui en découlent. La méthode consiste donc à transformer le signal primaire temporel en un signal fréquentiel. Le spectre de fréquence du signal primaire est ensuite décomposé en plusieurs parties, au moins en deux parties, et de préférence en trois parties formant respectivement un spectre basse fréquence, moyenne fréquence et haute fréquence. Le spectre basse fréquence est utilisé pour recomposer (par transformation inverse) un signal temporel appelé signal secondaire basse fréquence. De même, le spectre moyenne fréquence est utilisé pour recomposer le signal temporel secondaire moyenne fréquence, et le spectre haute fréquence permet d'obtenir le signal temporel secondaire haute fréquence.

Sur la figure 4b, il est présenté la suite des opérations effectuées suite à la décomposition du signal primaire en signaux secondaires.

A partir du signal secondaire basse fréquence, on en déduit la mesure de l'épaisseur de la soudure avec une grande précision. On commence par étalonner le système par exemple par rapport à la surface supérieure de la contrepièce 14 en plaçant le palpeur principal 10, par exemple une roulette, sur cette surface. Ensuite, le palpeur principal 10 est appliqué sur la surface de la soudure (voir la figure 2) et l'épaisseur peut être déterminée par le capteur principal 11 et son signal 16 qui va varier de façon proportionnelle à l'épaisseur. Ensuite en production, le palpeur 10 va suivre de façon continue la surface de la soudure et cette mesure va donner le signal primaire. Dans ce signal primaire, comme les variations de l'épaisseur de la soudure, si elles sont présentes, sont lentes et de faible amplitude, elles formeront la composante basse fréquence du signal primaire que l'on obtiendra dans la transformation. De préférence le signal basse fréquence est obtenu à partir du spectre des fréquences du signal primaire qui sont inférieures à f₁. Selon l'invention, la valeur de f1 est supérieure à Cₘ/60 qui correspondrait à l'acquisition d'un point de mesure par emballage ; et de préférence supérieure à (Cₘ/60)*(Lₑ/10) qui correspondrait à un point de mesure tous les 10mm ; avec :
- f₁: fréquence en Hertz
- Cₘ : cadence de la machine en emballage par minute
- Lₑ : longueur de soudure par emballage en mm

Le signal secondaire basse fréquence permet de mesurer l'épaisseur de la soudure avec une précision inférieure à 10 microns et de préférence inférieure à 5 microns.

Le signal secondaire moyenne fréquence est calculé à partir du signal primaire grâce au spectre des fréquences supérieures à f₁ et inférieures à une fréquence f₂. Selon l'invention, la fréquence f2 est inférieure à (Cₘ/60)*(Lₑ/0,01) qui correspondrait à l'acquisition d'un point de mesure tous les 0,01mm ; et de préférence inférieure à (Cₘ/60)*(Lₑ/0.03) qui correspondrait à un point de mesure tous les 0.03mm ; avec : f₂ : fréquence en Hertz
- Cₘ : cadence de la machine en emballage par minute
- Lₑ : longueur de la soudure par emballage en mm

Le signal secondaire moyenne fréquence permet de mesurer la rugosité de la soudure et en particulier de détecter des défauts ponctuels pouvant apparaitre dans la zone soudée comme de fines particules provenant de l'emballage ou l'équipement de production. Ces fines particules créent des variations locales de l'épaisseur et peuvent provenir de l'abrasion entre le laminé et le dispositif de soudage.

Le signal secondaire haute fréquence est calculé à partir du signal primaire grâce au spectre des fréquences supérieures à f₂. L'analyse du signal haute fréquence est utilisée pour établir un diagnostic du bon fonctionnement du dispositif de mesure de l'épaisseur ainsi que de l'équipement de production. Une augmentation de l'amplitude du signal secondaire haute fréquence peut indiquer, par exemple, la perturbation électromagnétique du signal primaire mesuré par le capteur ou bien une usure de l'équipement de production.

Finalement, le signal secondaire basse fréquence est utilisé pour déterminer la valeur de mesure de l'épaisseur de la soudure. Selon un mode d'exécution de l'invention, la précision est inférieure à 10 microns et de préférence inférieure à 5 microns.

Un premier exemple de réalisation de l'invention consiste à produire des corps tubulaires de longueur 180mm à une cadence de production de 200 tubes par minute. Le laminé soudé présente une épaisseur de 300 microns et la zone soudée forme un recouvrement de 2mm. La fréquence d'acquisition est de 2000Hz. Dans cet exemple:
- ) La valeur de f1 est égale à 300 Hz et
- ) La valeur de f2 est égale à 600 Hz.

Un deuxième exemple de réalisation de l'invention consiste à produire des corps tubulaires de longueur 80mm à la cadence de production de 100 tubes par minute. Le laminé soudé présente une épaisseur de 250 microns et la zone soudée forme un recouvrement de1.5mm. La fréquence d'acquisition est de 2000Hz. Dans cet exemple:
- ) La valeur de f1 est égale à 66 Hz et
- ) La valeur de f2 est égale à 133 Hz

Dans un mode d'exécution, on détermine donc aussi le signal secondaire de moyenne fréquence. Ce signal permet de détecter et caractériser des défauts ponctuels sur la soudure tels que des poussières ou agrégats de matière plastique qui modifient l'état de surface et donc sont détectés lors de la mesure.

La figure 4b illustre sous forme de schéma-bloc les étapes du procédé lors de l'analyse de la mesure.

Premièrement, lorsque la mesure est faite et que le signal est acquis, on détermine la valeur de l'épaisseur tirée du signal basse fréquence. Si cette valeur n'est pas dans les tolérances prédéterminées, l'emballage concerné sera rejeté et écarté du lot de production une fois découpé. Les tolérances du signal basse fréquence sont souvent calculées à partir du taux de taux de compression de la soudure. Par exemple, considérons un laminé d'épaisseur 250 microns et une épaisseur visée de la soudure de 420 microns correspondant à un taux de compression de 16%. Considérons également que l'amplitude de variation du taux de compression acceptable est de 6%. La tolérance inférieure du signal secondaire basse fréquence est donc égale à 405 microns (correspondant à un taux de compression de 19%) et la tolérance supérieure est égale à 435 microns (correspondant à un taux de compression de 13%). De façon générale, on définit les tolérances du signal secondaire basse fréquence afin que les variations du taux de compression de la soudure soient inférieures à 10% et de préférence inférieures à 5%. Ces valeurs dépendent de la nature et de la composition des laminés. Certains laminés sont difficilement comprimables du fait du comportement rhéologique des matériaux qui les composent et du dispositif de soudage, c'est pourquoi le choix des tolérances doit être ajustée au cas par cas en fonction du laminé et du procédé de soudage utilisé. Si cette valeur est dans des tolérances prédéterminées, on peut ensuite procéder à une deuxième étape qui est optionnelle de mesure de la rugosité de la soudure. A cet effet, on détermine la valeur de la rugosité à partir du signal secondaire de moyenne fréquence. Si la valeur de la rugosité n'est pas dans les tolérances requises, l'emballage concerné sera rejeté et écarté du lot de production une fois découpé. Bien entendu, si l'emballage a déjà été considéré comme non-conforme lors de la première étape (contrôle de l'épaisseur de la soudure), il n'est pas nécessaire de procéder à cette deuxième mesure de rugosité. C'est une perte de temps et de ressources puisque l'emballage sera de toute façon rejeté.

La tolérance du signal secondaire moyenne fréquence est de préférence inférieure à +/-5 microns et avantageusement inférieure à +/-3 microns. Le réglage des seuils à +/-3 microns permet d'écarter en temps réel du lot de production tous les emballages dans lesquels des poussières ou défauts de rugosité de tailles supérieures à 3 microns. Si la valeur de rugosité est dans les tolérances, on peut encore déduire et analyser le bruit dans le signal secondaire à haute fréquence, ce bruit étant lié au fonctionnement de la machine de production. Si ce bruit n'est pas dans les tolérances requises et/ou prédéterminées, cela veut dire que la machine ne fonctionne pas de façon correcte et elle doit être réparée/ajustée.

Le réglage de la tolérance du signal secondaire haute fréquence dépend du dispositif de soudage, de sa cadence de production, de son état global. Le signal secondaire haute fréquence donne une indication également de la qualité de la chaîne d'acquisition du signal primaire de mesure de l'épaisseur de la soudure. Selon l'invention, le signal secondaire haute fréquence est un outil de diagnostic tant sur l'équipement de production que sur la chaîne d'acquisition. Pour un équipement récent en production produisant à une cadence de 100 emballages par minute, correspondant à une vitesse de soudage linéaire de l'ordre de 20m/min les tolérance sont choisies inférieures à +/-80 microns et de préférence inférieures à +/-40 microns.

Si le bruit est dans les tolérances (par exemples des valeurs prédéterminées), la soudure de l'emballage est acceptée et on peut passer aux autres étapes de fabrication de l'emballage.

Dans une variante, on peut ne prendre en compte lors de l'analyse que le paramètre de l'épaisseur de la soudure, et non pas la rugosité ni le bruit de la machine et ne décider sur la conformité de l'emballage que sur cet unique critère.

Dans une autre variante, on peut ne prendre en compte que deux critères sur les trois (épaisseur et rugosité ou bruit machine).

Ce choix du nombre de critères peut être déterminé par le type de produit fabriqué et la gamme dudit produit (produit de luxe ou bas de gamme).

Bien que le schéma de la figure 4b illustre les étapes de façon successives, il est clair que l'analyse des signaux secondaires et les calculs peuvent être faits en parallèle pour optimiser le temps de traitement de l'information.

Dans ces figures, les références "A" et "B" encerclées sont illustrées pour faire le lien entre les figures 4a et 4b. Par exemple, après la dernière opération ou étape de la figure 4a, c'est-à-dire la "Décomposition du signal primaire en signaux secondaires", on passe dans le procédé à la première opération ou étape de la figure 4b, c'est-à-dire la "Déduction de l'épaisseur de la soudure en utilisant le signal secondaire basse fréquence".

De même, dans la figure 4b, si on se trouve dans l'opération "Emballage écarté du lot de production" (voir sur le côté droite de la figure 4b), la référence encerclée "B" indique que l'on remonte à la figure 4a sur la même référence encerclée "B" et que l'on va agir sur les paramètres de réglage de la machine et de préparation, notamment sur la mise en position et/ou le chauffage et/ou la compression et/ou le refroidissement. Ces étapes ont été décrites ci-dessus en détail.

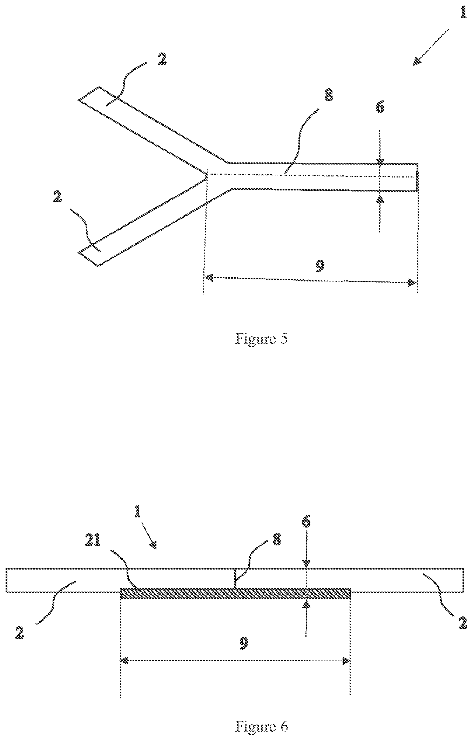

Les figures 5 à 8 représentent d'autres exemples de soudures pouvant être réalisées et mesurées avec les principes de l'invention.

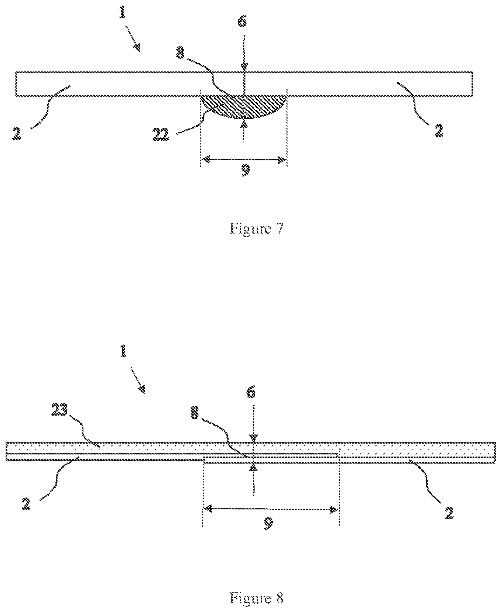

La figure 5 illustre une soudure par recouvrement de deux extrémités 2, la figure 6 une soudure bout à bout avec une bande de renfort 21 couvrant l'interface de soudure 8, la figure 7 une autre soudure bout à bout avec un cordon de soudure 22 et la figure 8 une soudure par recouvrement avec une couche extrudée 23. Les principes de l'invention peuvent s'appliquer à toutes ces configurations d'assemblage, et d'autres encore, pour la mesure de l'épaisseur de la soudure 6 selon ce qui est exposé ci-dessus.

Les modes d'exécution décrits dans la présente demande le sont à titre d'exemples illustratifs et ne doivent pas être considérés comme limitatifs. D'autres modes d'exécution peuvent faire appel à des moyens équivalents à ceux décrits par exemple tant que cela reste dans le cadre des revendications.

Les modes d'exécution peuvent également être combinés entre eux en fonction des circonstances, ou des moyens et/ou étapes de procédé utilisés dans un mode peuvent être utilisés dans un autre mode, tant que cela reste dans le cadre des revendications. Ainsi, par exemple, les valeurs numériques sont données à titre d'indications illustratives et d'autres valeurs sont possibles en fonction des modes d'exécution et des produits fabriqués (produits en tant que tels, gammes de produits etc.), tant que cela reste dans le cadre des revendications.

## Revendications

1. Procédé de soudage en continu d'une feuille en matière plastique pour la confection d'emballages flexibles, comme des tubes, comprenant au moins les étapes suivantes :
- Mise en position de la feuille par rapport au dispositif de soudage
- Mise en contact des extrémités de la feuille
- Formation d'une zone soudée par chauffage, mise en pression et refroidissement desdites extrémités
ledit procédé étant **caractérisé par** les étapes suivantes
- Acquisition d'un signal primaire temporel proportionnel à l'épaisseur de la soudure
- Transformation du signal primaire temporel en un signal primaire fréquentiel, et définition d'un spectre basses fréquences, d'un spectre moyennes fréquences et d'un spectre hautes fréquences,
- Recomposition d'au moins un signal secondaire basse fréquence à partir du spectre basses fréquences,
- ledit signal secondaire basse fréquence étant utilisé pour mesurer l'épaisseur de la soudure avec une précision inférieure à 10 microns et de préférence inférieure à 5 microns, de telle sorte que la précision de mesure est environ 10 fois inférieure à l'amplitude du bruit parasite.

2. Procédé selon la revendication 1, dans lequel le signal primaire est également recomposé en un signal secondaire moyenne fréquence à partir de du spectre moyennes fréquences, ledit signal étant utilisé pour détecter des variations rapides de l'épaisseur et/ou des défauts ponctuels sur la soudure tels que des poussières ou agrégats de matière plastique qui modifient l'état de surface.

3. Procédé selon la revendication 1 ou 2, dans lequel le signal primaire est également recomposé en un signal secondaire haute fréquence à partir du spectre hautes fréquences, ledit signal étant utilisé pour caractériser l'équipement de soudage dans son environnement.

4. Procédé selon l'une de revendications précédentes, dans lequel la fréquence d'acquisition du signal primaire est supérieure à 100Hz

5. Procédé selon l'une de revendications précédentes, dans lequel la fréquence d'acquisition du signal primaire est supérieure à 1000Hz.

6. Procédé selon l'une des revendications précédentes, dans lequel le signal secondaire basse fréquence est obtenu à partir du spectre des fréquences du signal primaire qui sont inférieures f₁, f₁ étant supérieure à Cₘ/60 où
- f₁: est la fréquence en Hertz
- Cₘ: est la cadence machine en emballage par minute.

7. Procédé selon l'une des revendications précédentes, dans lequel f₁ est supérieure à (Cₘ/60)×(Lₑ/10) et où
- f₁: est la fréquence en Hertz
- Cₘ: est la cadence machine en emballage par minute
- Lₑ: est la longueur de soudure d'un emballage en mm.

8. Procédé selon l'une de revendications précédentes, dans lequel le signal secondaire moyenne fréquence est dans le spectre de fréquences comprises entre le signal secondaire basse fréquence (f₁) et une fréquence f₂, f₂ étant inférieure à (Cₘ/60)*(Lₑ/0,01) où
- f₂: est la fréquence en Hertz
- Cₘ: est la cadence machine en emballage par minute
- Lₑ: est la longueur de soudure d'un emballage en mm.

9. Procédé selon l'une des revendications précédentes, dans lequel f₂ est inférieure à (Cₘ/60)*(Lₑ/0.03) où
- f₂: est la fréquence en Hertz
- Cₘ: est la cadence machine en emballage par minute
- Lₑ: est la longueur de soudure d'un emballage en mm.

10. Procédé selon l'une de revendications précédentes, dans lequel le signal secondaire haute fréquence est dans le spectre de fréquences supérieur à celui de la plage du signal secondaire de moyenne fréquence.

11. Procédé selon l'une des revendications précédentes, comprenant une étape d'étalonnage pour calibrer l'épaisseur mesurée de la soudure.

12. Dispositif pour la mise en oeuvre d'un procédé selon l'une des revendications précédentes 1 à 11, ledit dispositif comprenant des moyens de mise en forme et de soudage-compression-refroidissement d'une feuille flexible pour la confection d'emballages flexibles, comme un tube, le dispositif comprenant en outre des moyens pour mesurer l'épaisseur de la soudure et acquérir un signal primaire proportionnel à ladite épaisseur, des moyens pour transformer le signal primaire et le recomposer en au moins un signal secondaire basse fréquence et déterminer l'épaisseur de la soudure en utilisant ledit signal secondaire basse fréquence.

13. Dispositif selon la revendication précédente 12, dans lequel les moyens de mesure de l'épaisseur de la soudure comprennent au moins un palpeur (10) se déplaçant sur la soudure produite.

14. Dispositif selon la revendication 13, dans lequel il comprend un palpeur secondaire (17) se déplaçant sur la feuille en dehors de la zone soudée.

## Patentansprüche

1. Kontinuierliches Schweißverfahren für eine Folie aus Kunststoff zur Anfertigung von flexiblen Verpackungen, wie etwa Tuben, das mindestens die folgenden Schritte beinhaltet:
- Positionieren der Folie in Bezug auf die Schweißvorrichtung,
- Zusammenbringen der Enden der Folie,
- Bilden eines Schweißbereichs durch Erhitzen, Zusammendrücken und Abkühlen der Enden,
wobei das Verfahren durch die folgenden Schritte gekennzeichnet ist:
- Erfassen eines primären Zeitsignals, das zu der Dicke der Schweißnaht proportional ist,
- Umwandeln des primären Zeitsignals in ein primäres Frequenzsignal und Definieren eines Niederfrequenzspektrums, eines Mittelfrequenzspektrums und eines Hochfrequenzspektrums,
- Rekonstruieren mindestens eines sekundären Niederfrequenzsignals anhand des Niederfrequenzspektrums,
- wobei das sekundäre Niederfrequenzsignal dazu verwendet wird, die Dicke der Schweißnaht mit einer Genauigkeit von unter 10 µm und vorzugsweise unter 5 µm zu messen, sodass die Messgenauigkeit etwa um das 10-fache kleiner als die Rauschamplitude ist.

2. Verfahren nach Anspruch 1, wobei das primäre Signal ferner anhand des Mittelfrequenzspektrums zu einem sekundären Mittelfrequenzsignal rekonstruiert wird, wobei das Signal dazu verwendet wird, schnelle Schwankungen der Dicke und/oder punktuelle Fehler an der Schweißnaht, wie etwa Staub oder Ansammlungen von Kunststoff, die den Oberflächenzustand verändern, zu detektieren.

3. Verfahren nach Anspruch 1 oder 2, wobei das primäre Signal ferner anhand des Hochfrequenzspektrums zu einem sekundären Hochfrequenzsignal rekonstruiert wird, wobei das Signal dazu verwendet wird, die Schweißausrüstung in ihrer Umgebung zu charakterisieren.

4. Verfahren nach einem der vorhergehenden Ansprüche, wobei die Erfassungsfrequenz des primären Signals größer als 100 Hz ist.

5. Verfahren nach einem der vorhergehenden Ansprüche, wobei die Erfassungsfrequenz des primären Signals größer als 1000 Hz ist.

6. Verfahren nach einem der vorhergehenden Ansprüche, wobei das sekundäre Niederfrequenzsignal anhand des Spektrums der Frequenzen des primären Signals erhalten wird, die kleiner als f₁ sind, wobei f₁ größer als Cₘ/60 ist, wobei
- f₁: die Frequenz in Hertz ist,
- Cₘ: der Takt der Maschine beim Verpacken pro Minute ist.

7. Verfahren nach einem der vorhergehenden Ansprüche, wobei f₁ größer als (Cₘ/60)×(Lₑ/10) ist und wobei
- f₁: die Frequenz in Hertz ist,
- Cₘ: der Takt der Maschine beim Verpacken pro Minute ist,
- Lₑ: die Schweißnahtlänge einer Verpackung in mm ist.

8. Verfahren nach einem der vorhergehenden Ansprüche, wobei das sekundäre Mittelfrequenzsignal in dem Spektrum von Frequenzen liegt, die zwischen dem sekundären Niederfrequenzsignal (f₁) und einer Frequenz f₂ liegen, wobei f₂ kleiner als (Cₘ/60)*(Lₑ/0,01) ist, wobei
- f₂: die Frequenz in Hertz ist,
- Cₘ: der Takt der Maschine beim Verpacken pro Minute ist,
- Lₑ: die Schweißnahtlänge einer Verpackung in mm ist.

9. Verfahren nach einem der vorhergehenden Ansprüche, wobei f₂ kleiner als (Cₘ/60)*(Lₑ/0,03) ist, wobei
- f₂: die Frequenz in Hertz ist,
- Cₘ: der Takt der Maschine beim Verpacken pro Minute ist,
- Lₑ: die Schweißnahtlänge einer Verpackung in mm ist.

10. Verfahren nach einem der vorhergehenden Ansprüche, wobei das sekundäre Hochfrequenzsignal in dem Frequenzspektrum liegt, das über dem des Bereichs des sekundären Mittelfrequenzsignals liegt.

11. Verfahren nach einem der vorhergehenden Ansprüche, das einen Kalibrierungsschritt zum Kalibrieren der gemessenen Dicke der Schweißnaht beinhaltet.

12. Vorrichtung zur Umsetzung eines Verfahrens nach einem der vorhergehenden Ansprüche 1 bis 11, wobei die Vorrichtung Mittel zum In-Form-Bringen und zum Schweißen-Komprimieren-Abkühlen einer flexiblen Folie zur Anfertigung von flexiblen Verpackungen, wie etwa Tuben, beinhaltet, wobei die Vorrichtung ferner Mittel zum Messen der Dicke der Schweißnaht und zum Erfassen eines primären Signals, das zu der Dicke proportional ist, Mittel zum Umwandeln des primären Signals und zu dessen Rekonstruktion zu mindestens einem sekundären Niederfrequenzsignal und zum Bestimmen der Dicke der Schweißnaht unter Verwendung des sekundären Niederfrequenzsignals beinhaltet.

13. Vorrichtung nach dem vorhergehenden Anspruch 12, wobei die Mittel zum Messen der Dicke der Schweißnaht mindestens einen Fühler (10) beinhalten, der sich über die erzeugte Schweißnaht bewegt.

14. Vorrichtung nach Anspruch 13, wobei sie einen sekundären Fühler (17) beinhaltet, der sich außerhalb des Schweißbereichs über die Folie bewegt.

## Claims

1. Process for continuous welding of a sheet of plastic material for making flexible packages, such as tubes, comprising at least the following steps:
- Positioning the sheet with respect to the welding device,
- Placing the ends of the sheet in contact,
- Forming a welded zone by heating, pressing and cooling said ends,
said process being **characterized by** the following steps
- Acquiring a primary temporal signal proportional to the thickness of the weld,
- Transforming the primary temporal signal into a primary frequency signal, and defining a low-frequency spectrum, a medium-frequency spectrum and a high-frequency spectrum,
- Reconstructing at least one secondary low-frequency signal from the low-frequency spectrum,
- said low-frequency secondary signal being used to measure the thickness of the weld with an accuracy finer than 10 microns and preferably finer than 5 microns, such that the accuracy of the measurement is approximately 10 times finer than the amplitude of the interference noise.

2. Process according to claim 1, in which the primary signal is also reconstructed into a medium-frequency secondary signal from the medium-frequency spectrum, said signal being used to detect sudden variations in the thickness and/or one-off defects in the weld such as dust or plastic aggregates that modify the surface condition.

3. Process according to claim 1 or 2, in which the primary signal is also reconstructed into a high-frequency secondary signal from the high-frequency spectrum, said signal being used to characterize the welding equipment in its environment.

4. Process according to one of the preceding claims, in which the frequency of acquisition of the primary signal is greater than 100 Hz.

5. Process according to one of the preceding claims, in which the frequency of acquisition of the primary signal is greater than 1000 Hz.

6. Process according to one of the preceding claims, in which the low-frequency secondary signal is obtained from the spectrum of frequencies of the primary signal that are lower than f₁, f₁ being greater than Cₘ/60, where
- f₁: is the frequency in Hertz
- Cₘ: is the speed of the machine in packages per minute.

7. Process according to one of the preceding claims, in which f₁ is greater than (Cₘ/60)×(Lₑ/10) and where
- f₁: is the frequency in Hertz
- Cₘ: is the speed of the machine in packages per minute
- Lₑ: is the weld length per package in mm.

8. Process according to one of the preceding claims, in which the medium-frequency secondary signal is in the spectrum of frequencies lying between the low-frequency secondary signal (f₁) and a frequency f₂, f₂ being less than (Cₘ/60)*(Lₑ/0.01), where
- f₂: is the frequency in Hertz
- Cₘ: is the speed of the machine in packages per minute
- Lₑ: is the weld length per package in mm.

9. Process according to one of the preceding claims, in which f₂ is less than (Cₘ/60)*(Lₑ/0.03), where
- f₂: is the frequency in Hertz
- Cₘ: is the speed of the machine in packages per minute
- Lₑ: is the weld length per package in mm.

10. Process according to one of the preceding claims, in which the high-frequency secondary signal is in the spectrum of frequencies higher than that of the range of the medium-frequency secondary signal.

11. Process according to one of the preceding claims, comprising a calibration step for calibrating the measured thickness of the weld.

12. Device for implementing a process according to one of the preceding claims 1 to 11, said device comprising means for shaping and welding/compressing/cooling a flexible sheet for making flexible packages, such as a tube, the device further comprising means for measuring the thickness of the weld and acquiring a primary signal proportional to said thickness, means for transforming the primary signal and reconstructing it into at least one low-frequency secondary signal and determining the thickness of the weld by using said low-frequency secondary signal.

13. Device according to the preceding claim 12, in which the means for measuring the thickness of the weld comprise at least one feeler (10) that moves over the produced weld.

14. Device according to claim 13, in which it comprises a secondary feeler (17) that moves over the sheet outside the welded zone.
